**Europäisches Patentamt**

**European Patent Office**

**Office européen des brevets**

(11) Publication number: **0 042 275**
**A1**

## (12) EUROPEAN PATENT APPLICATION

(21) Application number: **81302640.8**

(22) Date of filing: **15.06.81**

(51) Int. Cl.³: **B 62 D 27/06**

(30) Priority: **17.06.80 GB 8019690**

(43) Date of publication of application: **23.12.81**
**Bulletin 81/51**

(84) Designated Contracting States: **AT BE CH DE FR GB IT LI LU NL SE**

(71) Applicant: **Harris, John, 19 Bournelea Avenue, Burnage Manchester 19 (GB)**

(72) Inventor: **Harris, John, 19 Bournelea Avenue, Burnage Manchester 19 (GB)**

(74) Representative: **Massey, Alexander et al, MARKS & CLERK Scottish Life House Bridge Street, Manchester, M3 3DP (GB)**

(54) **Load-carrying vehicles.**

(57) A vehicle having a load-carrying body (21) closable by a door is fitted with an internal door-locking mechanism operable automatically upon door closure or by an actuator external of the vehicle body. The actuator also serves to release the internal door-locking mechanism which comprises a locking bracket (30) secured to the door, a locking element (33) on the vehicle body (21) and pivotal into and out of the bracket (30), and pneumatic means (40) for effecting movement of the locking element (33).

0042275

This invention relates to load-carrying vehicles, and included in the expression "load-carrying vehicles" used herein and in the claims are tractor-trailer combinations, rigid vans, containers and railway load-carrying carriages. For convenience, reference will hereinafter and in the claims be made simply to vehicles.

A load-carrying vehicle has a body with a door openable for ingress and egress of cargo, which door is otherwise normally closed and secured by different external locks and/or locking bars which rarely deter or beat a determined thief and it is therefore an object of the present invention to provide a vehicle which substantially reduces the success rate of unlawful entry to the body of the vehicle.

According to the present invention there is provided a vehicle having a load-carrying body closable by a door fitted with an internal door-locking mechanism operable automatically upon door closure or by an actuator external of the vehicle body, which actuator also serves to release the internal door-locking mechanism.

Preferably the door-locking mechanism comprises a locking bracket secured to the door, a locking element on the vehicle body and pivotal into and out of the bracket, and pneumatic means for effecting movement of the locking element.

An embodiment of the present invention will now be described, by way of example, with reference to the accompanying drawings, in which:-

Figs. 1 and 2 are respectively a plan view and a rear view of a motor vehicle incorporating the present invention;

Fig. 3 is a fragmentary sectional view on the line III-III of Fig. 4 of a bottom internal door-locking mechanism according to the invention;

Fig. 4 is a sectional view on the line IV-IV of Fig. 3;

Fig. 5 is a fragmentary front view of a top internal door-locking mechanism according to the invention;

Fig. 6 is a sectional view on the line VI-VI of Fig. 5;

Fig. 7 is a sectional view on the line VII-VII of Fig. 6;

Fig. 8 is a perspective view of a bottom locking bracket, the configuration of a top locking bracket being indicated by dotted lines;

Fig. 9 is a perspective view of a locking lever; and

Fig. 10 is a perspective view of an alternative locking plate.

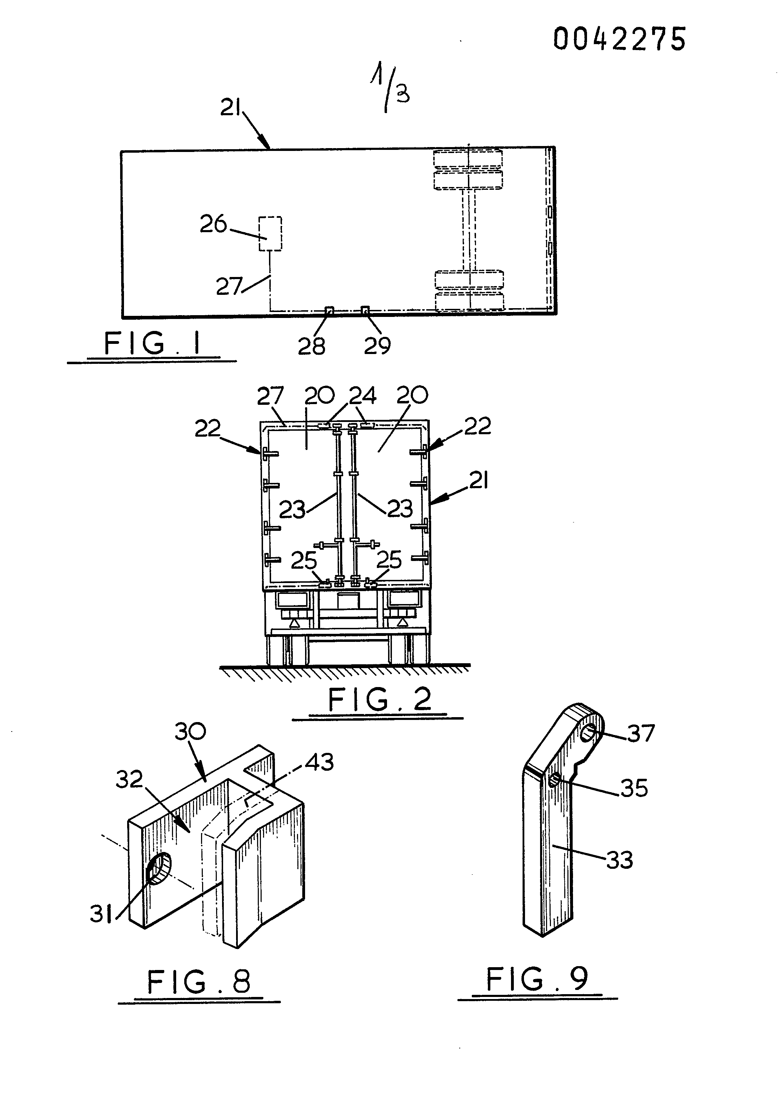

Figs. 1 and 2 of the drawings illustrate diagrammatically a load-carrying vehicle incorporating an internal door-locking arrangement according

4.

to the present invention.

The vehicle has two rear doors 20 hinged to the vehicle load-carrying body 21 as indicated at 22 with the customary external door locks 23 and with each door 20 having a top internal door-locking mechanism 24 and a bottom internal door-locking mechanism 25.

These internal locking mechanisms 24 and 25 are pneumatically operated as will be described in more detail later from an air reservoir 26 *via* pipes 27 incorporating a main multi-way valve 28 which is operated *via* a pilot valve (not shown) actuated either by closure of one or either door or by a keyswitch 29 external of the vehicle body.

In one position of the main valve 28 air is permitted to flow to the internal locking mechanisms 24 and 25 from the reservoir 26 to operate same to a locked position, while in another position of the valve 28 the valve 28 either (single acting ram, for example) isolates the reservoir 26 from the locking mechanisms 24 and 25 while allowing air to exhaust from the latter thus causing them to move to an unlocked position, or delivers air to urge the locking mechanisms 24 and 25 to an unlocked position (double acting rams for example).

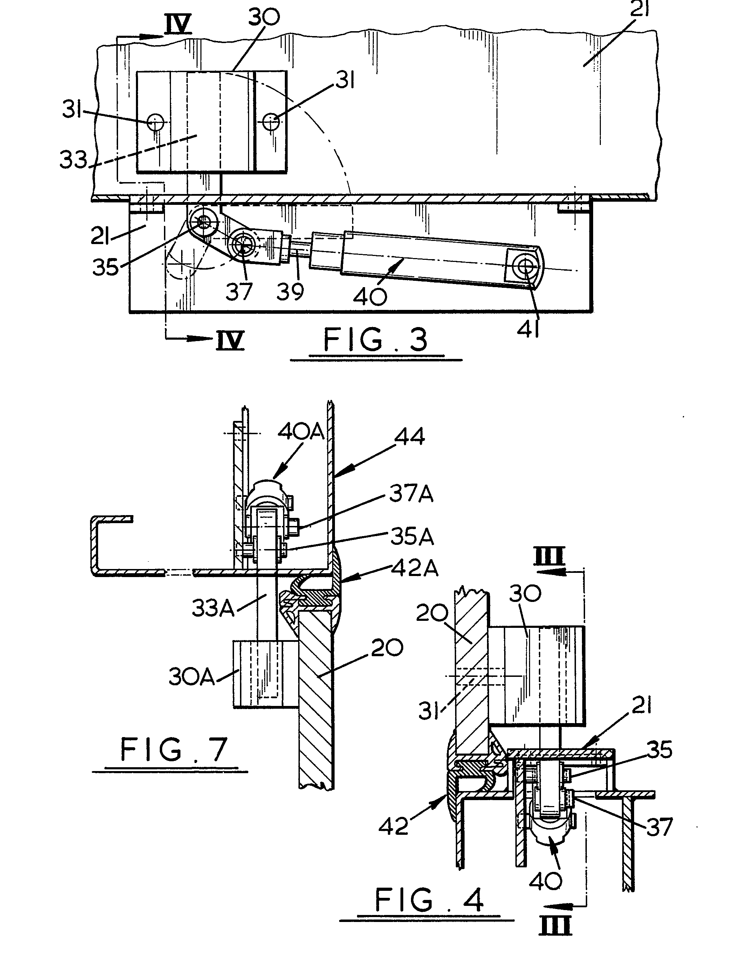

Referring now to Figs. 3 and 4, each bottom internal locking mechanism 25 comprises a locking bracket 30 (see Fig. 8 - full lines) bolted to each door 20 as indicated at 31 and defining a blind passage 32 into and out of which a locking lever 33 or a locking plate 34 can be pivoted. The locking lever 33 or locking plate 34 are respectively pivoted to the body 21 at 35 or 36 respectively.

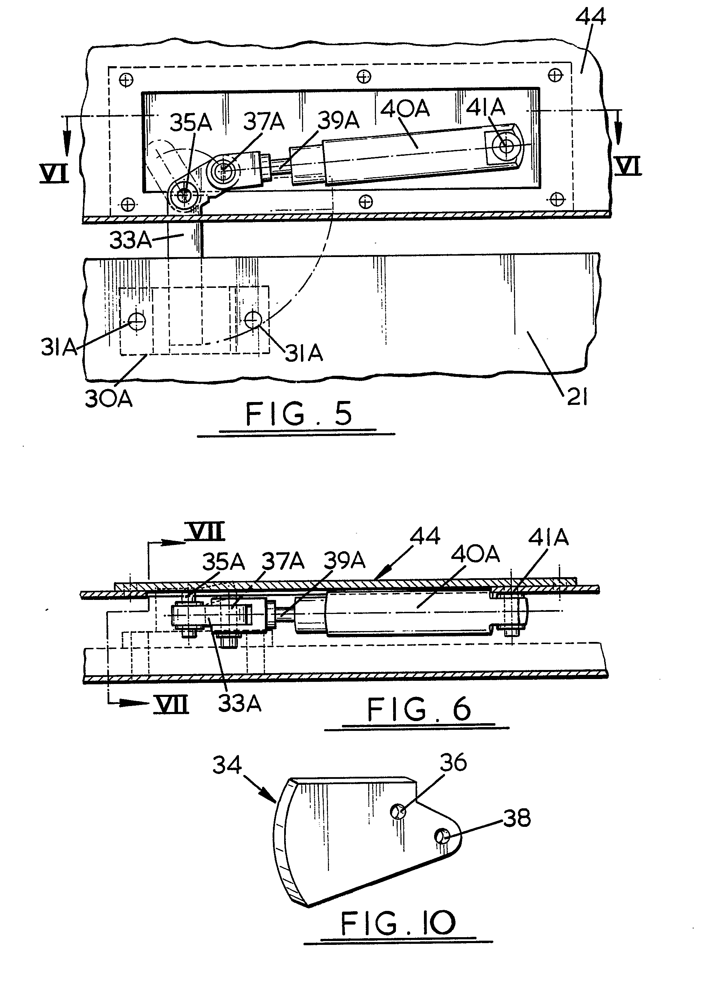

The locking lever 33 is of cranked construction (see Fig. 9) and has a ram connection point 37 while the locking plate 34 (see Fig. 10) has a ram connection point 38 offset and spaced from its pivot axis 36.

To either the connection points 37 or 38 is connected the piston 39 of a pneumatic ram 40 secured at its other end as indicated at 41 to the vehicle body 21.

The door 20 has a bottom sealing arrangement indicated at 42.

Referring now to Figs. 5 to 7, each upper internal door locking mechanism 24 is of substantially identical construction to its corresponding bottom locking mechanism 25 and identical parts are indicated by the same references with the suffix "A".

In this instance, however, the blind passage of each locking bracket 30A is narrower (see dotted lines 43 of Fig. 8). Also the rams 40A are housed in an upper sill 44 of the vehicle body 21.

Assuming that the rams 40, 40A are single acting (i.e. spring or other resilient return), operation of the pilot valve or pilot valves by one or each door 20 upon door closure causes the main valve 29 to place the pressurised air reservoir 26 in communication with the rams 40, 40A to actuate the latter to pivot the locking levers 33 or locking plates 34 into the blind passages 32 of the brackets 30, 30A thus internally locking the doors 20 which are then locked externally.

The advantages of the locking plates 34 over the locking levers 33 is that the former fill the blind passages 32 thus preventing any extraneous objects from falling therein and also provides with the bracket a larger locking area.

Operation of the pilot valve or valves by the external keyswitch 29 using a security key causes the main valve 28 to isolate the reservoir 26 and connect the ram 40, 40A to exhaust thus permitting the spring return of the latter to pivot the locking levers 33 or 34 out of the brackets 30, 30A, thus releasing the internal locking mechanisms 24 and 25.

The pilot valve or valves may, of course, be operated _via_ the keyswitch 29 instead of the door or doors to move the locking mechanisms 24 and 25 to locked positions.

0042275

Alternative external actuating mechanisms to the key-operated keyswitch 29 may be employed, for example time and/or combination locks suitably operably coupled to the pilot valve or valves.

If the rams 40, 40A are double-acting then door locking is as previously described but door unlocking by the pilot valve or valves upon key operation of the keyswitch 29 causes the main valve 28 to exhaust one side of each ram 40, 40A while pressurising the other side as is customary with such rams.

The main valve 28 may be electrically operated by a solenoid or solenoids forming part of an electrical control circuit controlled by a door or doors of the vehicle and/or the keyswitch 29.

It will be manifest that with existing vehicles having no internal locking arrangements the internal door locking mechanisms of the present invention can be provided in the form of a kit of parts capable of being fitted to such vehicles.

In an alternative construction a load-carrying vehicle has two rear doors closing the vehicle body and openable about vertical hinges at the body sides. When closed these doors are secured externally by any known and convenient locking arrangement as is customarily employed with such vehicles.

Each door has three vertically-spaced slidable locking bars carried in guides and normally

8.

0042275

extending the width of the door so as not to interfere with the other door or body side wall. Each locking bar of one door is aligned with its corresponding bar on the other door.

In one side wall of the vehicle body there are three locking bar-receiving gates or recesses while at a directly opposite location adjacent the other side wall is a rotatable vertical rod mounting three camming surfaces aligned with the three adjacent locking bars.

When the vertical rod is rotated its camming surfaces engage the adjacent locking bars and slide them sufficiently to engage behind the other door preferably in gates or guides thereon. This action causes the other locking bars, being pushed by the first set of locking bars, to engage in the gates or recesses in the trailer side wall.

Thus with the vertical rod secured against movement the doors are internally locked as well as externally locked.

The vertical rod, upon being rotated back to its original position, removes the camming surfaces and all the locking bars return to their original position under suitable resilient, preferably spring, action.

The rotation of the vertical rod may be effected by any convenient operating means, manual, mechanical, fluid pressure, electrical or combinations thereof and located external of the vehicle.

CLAIMS:

1. A vehicle having a load-carrying body closable by a door fitted with an internal door-locking mechanism operable automatically upon door closure or by an actuator external of the vehicle body, which actuator also serves to release the internal door-locking mechanism.

2. A vehicle as claimed in claim 1 wherein the door-locking mechanism comprises a locking bracket secured to the door, a locking element on the vehicle body and pivotal into and out of the bracket, and pneumatic means for effecting movement of the locking element.

3. A vehicle as claimed in claim 2, wherein the pneumatic means is a pneumatic ram connected at one end to the vehicle body and at its other end to the locking element at a location spaced from the pivot axis of the latter.

4. A vehicle as claimed in claim 2 or 3, wherein the locking element is a cranked locking bar.

5. A vehicle as claimed in claim 2 or 3, wherein the locking element is a plate.

6. A vehicle as claimed in any one of claims 3 to 5, wherein the pneumatic ram is part of a pneumatic circuit comprising a pressurised air reservoir, a main multi-way valve and a pilot valve for operating the latter.

7. A vehicle as claimed in claim 6, wherein the pilot valve is operable by the vehicle door and/or the external actuator.

8. A vehicle as claimed in claim 7 wherein the external actuator is a key operable keyswitch on the exterior of the vehicle body.

9. A vehicle as claimed in any one of claims 3 to 8 wherein the pneumatic ram is single acting.

10. A vehicle as claimed in any one of claims 3 to 8 wherein the pneumatic ram is double acting.

11. A vehicle as claimed in any one of claims 6 to 10 wherein the pilot valve is replaced by an electrically-operated solenoid.

12. A vehicle as claimed in any one of the preceding claims wherein the door has both a top and a bottom internal door locking mechanism.

13. A kit of parts for fitment to a vehicle door comprising the components of the internal door-locking mechanism as claimed in any one of claims 1 to 12.

14. A vehicle, substantially as hereinbefore described with reference to the accompanying drawings.

FIG. 1

FIG. 2

FIG. 8

FIG. 9

FIG. 3

FIG. 7

FIG. 4

2/3

FIG. 5

FIG. 6

FIG. 10

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 3 601 453 (SILVERMAN) <br> * column 2, line 43 to column 3, line 11; fig. 1 to 3 * <br> -- | 1-3, 6,9, 11,12 | B 62 D 27/06 |
| A | US - A - 3 624 761 (KOHN) <br> ---- | | |

**TECHNICAL FIELDS SEARCHED (Int. Cl.³)**

B 62 D 27/00
B 62 D 33/00

**CATEGORY OF CITED DOCUMENTS**

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 31-08-1981 | LUDWIG |

EPO Form 1503.1  06.78